# EUROPEAN PATENT APPLICATION

(11) **EP 4 815 244 A1**
(43) Date of publication of application: **30.09.2026**
(21) Application number: 24894385.4
(22) Date of filing: 21.10.2024
(51) Int. Cl.: H02J 3/36, H02J 3/00, H02J 3/32

(54) **HYBRID POWER GENERATION AND TRANSMISSION SYSTEM, AND MANAGING METHOD FOR SAME**

(30) Priority: 22.11.2023 KR 20230163020
(71) Applicant: Kim, Hai Soo, Goyang-si Gyeonggi-do 10403 (KR)
(72) Inventor: Kim, Hai Soo, Goyang-si Gyeonggi-do 10403 (KR)
(74) Representative: Cabinet Chaillot
(86) International application number: PCT/KR2024/015994
(87) International publication number: WO 2025/110489

(57) **Abstract**

The present invention provides a hybrid power generation and transmission system and a management method for same. The hybrid power generation and transmission system, according to an embodiment of the present invention, comprises: an ESS installed in a base power station and storing surplus electricity among electricity generated in the base power station; and a control device for controlling the surplus electricity to be transmitted from the ESS to a distribution system by using a high voltage direct current (HVDC) transmission technology. At this time, the surplus electricity is transmitted from the ESS to the distribution system through a transmission line used for alternating current (AC) transmission.

## Description

### [Technical Field]

The present invention relates to a hybrid power generation and transmission system and a method of managing the same, and more particularly, to a hybrid power generation and transmission system employing a high voltage direct current (HVDC) transmission technology and a method of managing the same.

### [Background Art]

South Korea's power grid is managed to maintain world-class stability. It has a lower power loss rate during transmission and distribution than developed countries such the US, Germany, Japan, etc., and the entire power grid is organically interconnected, enabling real-time interoperation.

However, with the population and industry continuously being concentrated in the capital region, regional imbalances in electricity are worsening, and as a result, South Korea's power grid is currently facing significant challenges.

The following description is based on South Korea's power grid, but other countries may have similar issues. According to Korea Electric Power Corporation (KEPCO) which is South Korea's power supplier, the Chungcheong, Honam, Yeongnam, and Gangwon regions are currently producing more electricity than they consume. To meet the power demand in the capital region, the surplus electricity from non-capital regions should be transmitted to the capital region, but the existing transmission lines are insufficient for this. Since massive power-consuming facilities such as Internet data centers (IDCs), semiconductor production lines, biotech plants, etc., are being built or expanded in the capital region, it is becoming increasingly difficult to supply the necessary amount of power in a timely manner.

In particular, the most pressing issue is the shortage of transmission lines required for transmitting electricity generated in the east coast region to other areas such as the capital region. Although large-scale thermoelectric power plants in the east coast region have been generating large amounts of electricity since 2022, a lack of transmission lines to transmit this electricity to other regions has forced power plants on the east coast to operate at only about 40% of their output or to shut down entirely. In addition, Unit 2 of the Shin Hanul Nuclear Power Plant (1,400 MW capacity) constructed in Uljin, North Gyeongsang Province, in September 2023 has entered the testing phase and is scheduled to begin commercial operation in the first half of 2025, but there is a shortage of transmission lines for transmitting the electricity generated there.

According to the original plan, the transmission lines were supposed to be built before the power plant began operations, but the schedule has been repeatedly delayed due to opposition from residents, delays in obtaining permits from local authorities, and the like. Preferably, power transmission lines should be buried underground through undergrounding projects, or appropriate measures should be taken to address concerns regarding electromagnetic fields, etc., while providing adequate compensation to nearby residents. However, the process of installing a new power transmission system including transmission lines and towers is not an easy task, and, above all, KEPCO, who is responsible for this, is struggling with massive deficits, making it difficult to secure funding.

As a result of issues such as a shortage of transmission lines, etc., new power plants are currently unable to generate electricity at their rated capacity and are operating at reduced power. In addition, completion dates for plants, data centers, etc., currently under construction in the capital region are being delayed, and issues such as compensation for derating between KEPCO and the new power plants, etc., continuously arise.

Electricity that is generated at a power plant but not sold, or that remains at the plant for various reasons, is generally referred to as surplus electricity. From a macroeconomic perspective, electricity lost through power lines during transmission before reaching customers may also be considered surplus electricity.

Research has been conducted on the use of an energy storage system (ESS) to utilize such surplus electricity. In this regard, Korean Patent Application No. 10-2020-0055959 (applicant: KEPCO) discloses a system for controlling operations of a thermoelectric power plant using an ESS.

Meanwhile, high voltage direct current (HVDC) transmission technologies are emerging as a solution to these problems. HVDC transmission is a technology in which alternating current (AC) power generated at a power plant is converted into DC power for transmission, and then the DC power is converted back into AC power in a receiving area to supply power. Since DC does not generate a magnetic field, electromagnetic interference is minimal, energy loss during long-distance transmission is low, and power can be freely transmitted to other countries with different standard frequencies.

HVDC cables have a large cross-sectional area and a high temperature tolerance to allow high current to flow through a conductor therein. For this reason, HVDC cables are significantly thicker and heavier than existing transmission lines. Therefore, HVDC cables should be installed differently from transmission lines in existing transmission systems, which is problematic.

### [Description of Invention]

### [Technical Problem]

The present invention has been conceived in response to the aforementioned background art, and an object of embodiments of the present invention is to provide a hybrid power generation and transmission system for transmitting surplus electricity generated from a baseload power plant to a power system via existing power transmission lines, which are used for alternating current (AC) transmission, without installing new transmission lines or high voltage direct current (HVDC) cables and a method of managing the same.

Another object of embodiments of the present invention is to provide a hybrid power generation and transmission system for transmitting surplus electricity to a power system with minimal loss during hours of high customer demand and a method of managing the hybrid power generation and transmission system.

However, objects of the present invention are not limited to those described above, and other objects that have not been described will be clearly understood by those of ordinary skill in the art from the following description.

### [Technical Solution]

As a technical solution to achieve the foregoing technical objects, a hybrid power generation and transmission system according to an embodiment of the present invention includes: an energy storage system (ESS) installed in a baseload power plant and configured to store surplus of electricity generated from the baseload power plant; and a control device configured to perform control such that the surplus electricity is transmitted from the ESS to a distribution system using a high voltage direct current (HVDC) transmission technology.

Here, the surplus electricity is transmitted from the ESS to the distribution system via a transmission line used for alternating current (AC) transmission.

In addition, according to an embodiment of the present invention, the control device may assess profit margins from electricity sales in a case where the electricity generated from the baseload power plant is transmitted via the transmission lines using AC and another case where the surplus electricity is transmitted via the transmission lines using HVDC, and determine electricity to be transmitted via the distribution system on the basis of assessment results.

In addition, according to an embodiment of the present invention, the control device may determine, in real time, whether the surplus electricity stored in the ESS is HVDC which meets a predetermined criterion.

Here, the predetermined criterion may be 1.5 kV or higher according to international standards or 7 kV or higher according to South Korean standards.

As a technical solution to achieve the foregoing technical objects, a method of managing a hybrid power generation and transmission system according to an embodiment of the present invention includes: storing, by an ESS installed in a baseload power plant, surplus of electricity generated from the baseload power plant; and performing control, by a control device connected to the ESS, such that the surplus electricity is transmitted from the ESS to a distribution system using an HVDC transmission technology.

Here, the surplus electricity is transmitted from the ESS to the distribution system via transmission lines used for alternating current (AC) transmission.

### [Advantageous Effects]

According to the foregoing embodiments of the present invention, by performing alternating current (AC) transmission or high voltage direct current (HVDC) transmission via transmission lines included in transmission facilities of existing electric power systems, it is possible to obtain the following effects.

According to the embodiments of the present invention, since existing transmission lines are utilized to transmit electricity to several regions using AC or HVDC without installing new transmission lines or HVDC cables, it is possible to solve problems caused by a shortage of transmission lines within a short time.

In addition, according to the embodiments of the present invention, an HVDC transmission technology is utilized to minimize power loss caused during AC transmission and transmit bulk power without stepping up or down the voltage.

In addition, according to the embodiments of the present invention, an HVDC transmission technology is utilized such that no magnetic field is generated, resolving complaints from nearby residents regarding electromagnetic radiation.

In addition, according to the embodiments of the present invention, it is possible to store surplus electricity that may be wasted using an energy storage system (ESS) and transmit the surplus electricity (DC) via existing transmission lines using an HVDC transmission technology, minimizing the construction of new power plants and transmission lines and contributing to low-carbon policies to some extent.

In addition, according to the embodiments of the present invention, since electricity to be transmitted to a distribution system is determined by considering the profit margin from electricity sales, this maximizes profit from electricity sales.

Effects of the present invention are not limited to those described above, and other effects that have not been described will be clearly understood by those of ordinary skill in the art from the following description.

### [Description of Drawings]

FIG. 1 is a diagram schematically showing an existing power system.
FIG. 2 is a diagram schematically showing a hybrid power generation and transmission system according to embodiments of the present invention.
FIG. 3 is a diagram illustrating a detailed configuration of an energy storage system (ESS) shown in FIG. 2.
FIG. 4 is a flowchart illustrating a method of managing a hybrid power generation and transmission system according to embodiments of the present invention.

### [Modes of the Invention]

The advantages and features of the present invention and a method of achieving them will become apparent from embodiments which will be described in detail below with reference to the accompanying drawings. However, the present invention is not limited to the embodiments disclosed herein and may be implemented in various different forms. It is obvious that those skilled in the technical field of the present invention can apply the principals and new characteristics disclosed herein to other embodiments without departing from the present invention.

Throughout the specification, like reference numerals refer to like components unless particularly described otherwise. In describing the present invention, when detailed description of a relevant known technology is determined to obscure the subject matter of the present invention, the detailed description will be omitted. The shapes, sizes, ratios, angles, numbers, etc., shown in the drawings are illustrative, and the present invention is not limited to the content shown in the drawings.

In this specification, the terms "include" and/or "including" should be understood as representing the presence of corresponding features and/or components but not excluding the presence of addition of one or more other features, components, and/or groups thereof. Unless otherwise specified or unless the context clearly indicates otherwise, singular forms in this specification and the claims should generally be interpreted to mean "one or more." Although the terms "first," "second," etc., may be used to describe various components, these components are not limited by the terms, and the terms are used for the sole purpose of distinguishing one component from others.

Hereinafter, various embodiments of the present invention will be described in detail with reference to the accompanying drawings.

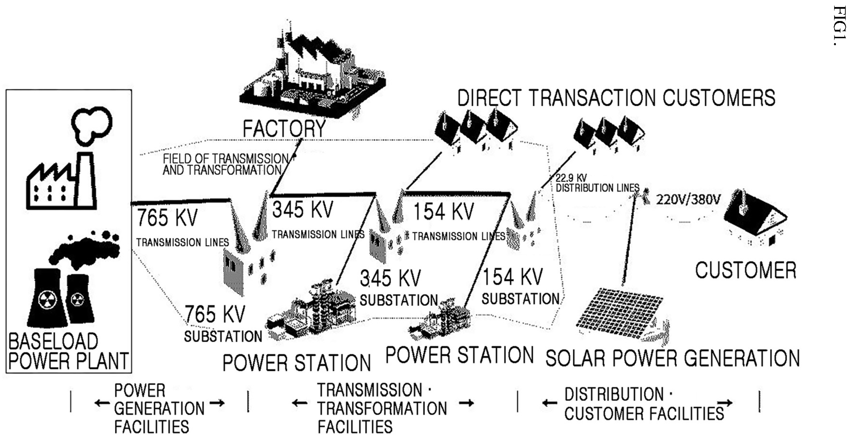

FIG. 1 is a diagram schematically showing an existing power system.

The existing power system includes power generation facilities, transmission facilities, substation facilities, distribution facilities, and customer facilities, and electricity generated at a baseload power plant is supplied to customers through transmission lines and substations via distribution lines.

For reference, this is a conceptual diagram of a power system included in materials released by the Ministry of Trade, Industry and Energy on December 29, 2021, when the ministry announced a power system innovation plan.

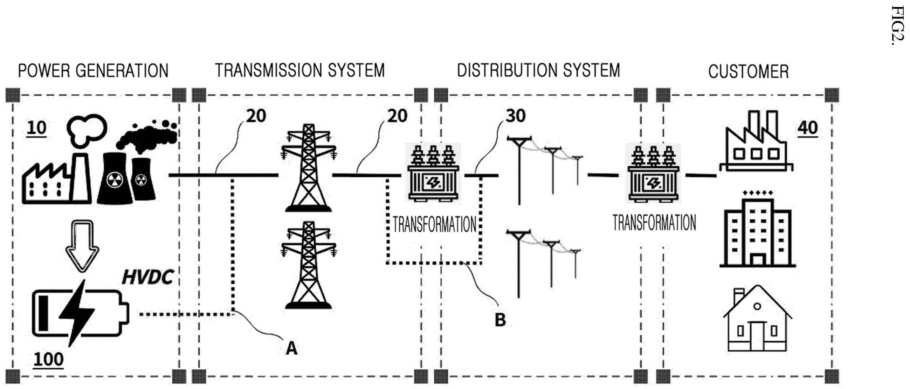

FIG. 2 is a diagram schematically showing a hybrid power generation and transmission system according to embodiments of the present invention.

The hybrid power generation and transmission system roughly includes components related to power generation, a hybrid transmission system, substation components provided at local substations, a distribution system, and customers.

The hybrid transmission system transmits electric power from an energy storage system (ESS) 100 installed in a baseload power plant 10 to substations in each of areas and includes transmission towers and transmission lines 20 included in the transmission facilities of the existing power system shown in FIG. 1. However, unlike transmission facilities of existing power systems, the hybrid transmission system may not require a transformation step for ultra-high-voltage step-up or step-down (see B of FIG. 2).

The transmission lines 20 may be designed to transmit alternating current (AC) power or direct current (DC) power.

Therefore, in embodiments of the present invention, the transmission lines 20 may be used for AC transmission or high voltage direct current (HVDC) transmission.

The transmission lines 20 of South Korea are classified into 3 types, 765 kV, 345 kV, and 154 kV. In other countries, the transmission lines 20 may obviously be classified differently from those in South Korea, depending on their policies and local situations.

According to embodiments of the present invention, the transmission lines 20 of 765 kV, 345 kV, and 154 kV used for AC transmission may be utilized in connection with the ESS 100 without any particular modification.

A primary step-down substation performs a task of stepping down, for example, 765 kV to 345 kV or 345 kV to 154 kV.

The substation components are provided in the substations of each of the areas to adjust the voltage during transmission and distribution processes and include not only a substation but also a transformer, a switchgear, a protective relay, a lightning arrester, a grounding device, a switchboard, and the like.

Here, the substation is a secondary step-down substation and performs a task of stepping down, for example, 154 kV to 22 kV.

The distribution system transmits the electricity stepped-down via the substation components of the local substation to customers 40 and includes distribution lines 30, a distribution substation, and a pole-mounted transformer.

The distribution substation performs a task of stepping down, for example, 22 kV to 6.6 kV, and the pole-mounted transformer performs a task of stepping down, for example, 6.6 kV to 220 V or 110 V.

The customers 40 are consumers that actually use the electricity such as factories, building, houses, and the like.

The components related to power generation include the baseload power plant 10 and the ESS 100.

The baseload power plant 10 generates electricity and transmits the generated electricity to the transmission system in connection with the transmission system.

In embodiments of the present invention, the baseload power plant 10 may be a coal-fired power plant or a nuclear power plant. A baseload power plant is a power plant that operates continuously 24 hours a day, 365 days a year except for a period of annually scheduled preventive maintenance and forms the foundation of electric power.

Power generation using renewable energy is clearly distinct from baseload power generation because the amount and timing of power generation are irregular, making power generation using renewable energy unstable. Renewable energy refers to both renewable energy sources such as solar power, solar thermal energy, bioenergy, wind power, hydropower, etc., and new energy sources such as fuel cells, hydrogen energy, and the like. In other words, in embodiments of the present invention, the baseload power plant 10 is not a power plant that generates power using renewable energy.

The ESS 100 may store some of the electricity generated by the baseload power plant 10 and transmit (discharge) the stored electricity to a power system.

For example, considering power consumption of the customers, during a period of low electricity consumption, surplus of the electricity generated by the baseload power plant 10 may be transmitted to and stored in the ESS 100, and during a period of high electricity consumption or a peak time, the stored surplus electricity may be transmitted (discharged) to the power system.

The ESS 100 according to embodiments of the present invention employs an HVDC transmission technology, and the transmission lines 20 of the existing transmission system are used for transmission rather than HVDC cables.

In addition, the ESS 100 according to embodiments of the present invention may be installed in the baseload power plant 10 and may receive and store electricity generated by the baseload power plant 10 with minimal loss. Whether the ESS 100 is installed in the baseload power plant 10 or outside of the baseload power plant 10 makes a significant difference in terms of power loss and economic feasibility.

According to embodiments of the present invention, the ESS 100 may be installed at, for example, each of at least one coal-fired power plant and at least one nuclear power plant.

When the ESS 100 is installed in each of a plurality of coal-fired power plants and nuclear power plants, specific components of the ESS which will be described below may be installed in each power plant, and in some cases, some components of the ESS may be installed in an integrated manner.

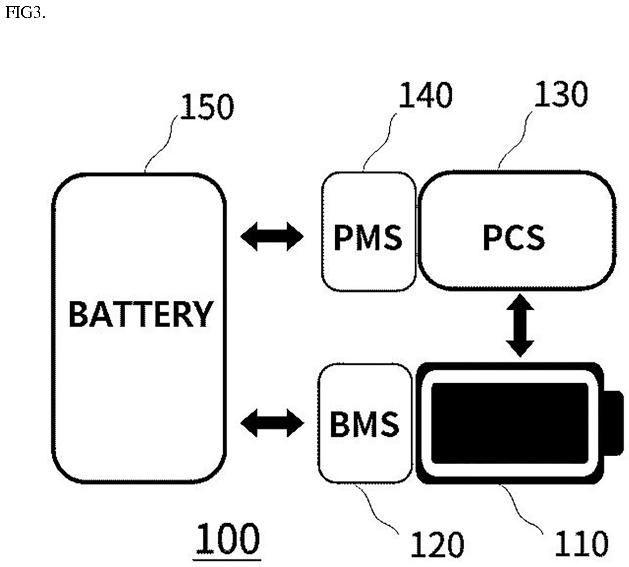

FIG. 3 is a diagram illustrating a detailed configuration of an ESS shown in FIG. 2.

The ESS 100 includes an ESS battery 110, a battery management system (BMS) 120, a power conversion system (PCS) 130, a power management system (PMS) 140, and an ESS management system (EMS) 150.

The ESS 100 according to embodiments of the present invention is connected (A) to the transmission lines 20 of the transmission system, and surplus electricity stored in the ESS 100 may be transmitted via the existing transmission lines 20 included in the existing power system in accordance with HVDC transmission.

In the ESS battery 110, multiple battery cells are connected in series or parallel. For example, the ESS battery 110 may be formed by connecting multiple racks. Each rack may include multiple modules connected in series, and each module may include multiple battery cells connected in series. The battery cells may be, for example, lithium polymer batteries.

The ESS battery 110 according to embodiments of the present invention may store surplus of the electricity generated by the baseload power plant 10 and may be installed in the baseload power plant 10.

The BMS 120 performs an operation of managing and monitoring the ESS battery 110.

The PCS 130 performs conversion operations between AC and DC, step-up and step-down operations, and other operations.

The PCS 130 may be designed to selectively include [1] a rectifier, a power supply unit (PSU), a switched-mode power supply (SMPS), etc., for converting AC into DC, [2] an inverter, a motor-generator set, an SMPS, etc., for converting DC into AC, [3] a linear regulator, a voltage regulator, a motor-generator set, an SMPS, etc., for changing a voltage level of DC, and [4] a transformer, a cycloconverter, a variable-frequency transformer, an SMPS, etc., for changing a frequency, a phase, or a voltage level of AC.

The PMS 140 performs an operation of controlling and managing the PCS 130.

The EMS 150 performs an operation of controlling the entire ESS 100 and managing various functions such as automatic frequency control, economic load dispatch, remote monitoring and control, and the like.

A control device according to embodiments of the present invention may be implemented as at least one of the BMS 120, the PMS 140, and the EMS 150 or implemented in a form in which these components are integrated.

Also, the control device according to embodiments of the present invention may perform control to transmit surplus electricity from the ESS 100 to the distribution system using the HVDC transmission technology. In this case, the surplus electricity may be transmitted from the ESS 100 to the substation components or the distribution system via the transmission lines 20 of the transmission system used for AC transmission.

The electricity and surplus electricity generated by the baseload power plant 10 are generally AC, and electricity inverted from AC to DC by the PCS 130 may be stored in the ESS battery 110. HVDC charged in the ESS battery 110 is transmitted to the distribution system via the transmission lines 20 of the transmission system used for AC transmission without conversion into AC, thus simplifying the transmission process and reducing power loss.

Here, the transmission lines 20 are a 3-phase 4-wire system, composed of 3 lines R, S, and T with a 120-degree phase shift and a neutral line (N).

While it is necessary to use all of the 3 lines of the transmission lines 20 for AC transmission, the 3 lines of the transmission lines 20 may be selectively used for HVDC transmission. In other words, HVDC may be transmitted using some or all of the 3 lines of the transmission lines 20. When all of the 3 lines are used for HVDC transmission, the transmission volume may be much higher than that of AC transmission.

In 2020, transmittable power for AC transmission was 240 MW at 154 kV, 900 MW at 345 kV, and 4200 MW at 765 kV. In the case of HVDC transmission, transmittable power may be two to three times that of AC transmission.

In particular, according to embodiments of the present invention, since surplus electricity which may be wasted may be stored in the ESS 100 and transmitted using HVDC via the transmission lines 20 of the existing transmission system which is used for AC transmission, it is possible to minimize the construction of new power plants and contribute to low-carbon policies to some extent.

A table below shows an analysis of expected effects of using the hybrid power generation and transmission system according to embodiments of the present invention, based on collectable objective data.

The analysis assumes that a 150 MW ESS is installed at each of 25 nuclear power plants in operation for 2022 in South Korea to store surplus electricity, and the surplus electricity is transmitted via existing transmission lines included in an existing power system using an HVDC transmission method. When the capacity of each ESS is increased or an ESS is installed and operated in each coal-fired power plant, it is expected that better results than those shown in the analysis below will be achieved.

Specifically, using the hybrid power generation and transmission system according to embodiments of the present invention can reduce coal-fired (steam) power generation by 18% and secure about 20% more electricity compared to actual usage by customers. Also, reducing coal-fired power generation reduces annual coal import costs by about 3.6 trillion KRW, and selling surplus electricity from ESSs generates about 1.7 trillion KRW in annual profit, resulting in a total annual profit of 5.3 trillion KRW. As a result, investment costs including the installation of ESSs, etc., can be recovered in about 6 months (0.51 years).

**[Table 1]**

| Category | Hybrid effect analysis | Description |
|---|---|---|
| i) Hybrid transmission volume of | 32,850,000 | |
| nuclear power plant (A) | MWh | |
| ii) Capacity of decommissionable steam power generation (bituminous coal) (B) | 32,850,000 MWh | Capacity of decommissionable steam power generation (for 2022): 18% |
| iii) Additionally available amount of electricity upon application of ESS+HVDC system (C) | 32,652,900 MWh | Ratio with respect to customer usage of 2022: 20% |
| iv) Cost saving from reduced bituminous coal consumption (D) | 3,620.6 billion KRW | D = B×110.22 KRW/kWh |
| v) Estimated construction cost of ESS power plant (150 MW) (E) | 2,729.1 billion KRW | Unit cost of ESS installation: 730 million KRW/MW, 25 units |
| vi) Revenue from sale of electricity generated from nuclear hybrid (F) | 1,723.8 billion KRW | F = A×52.5 KRW/kWh |
| vii) Estimated time required to recover ESS installation cost (G) | 0.511 years | G = E/(D + F) |

In the Description column of Table 1, regarding "Cost saving from reduced bituminous coal fuel consumption (D)," 110.22 KRW/kWh is the average annual unit cost of bituminous coal for 2022. Regarding "Estimated construction cost of ESS power plant (150 MW) (E)," 730 million KRW/MW is a value calculated using a contract unit price for one set of system stabilization ESS equipment, and regarding "Revenue from sale of electricity generated from nuclear hybrid (F)," 52.5 KRW/kWh is a unit price of nuclear power for 2022.

Meanwhile, the control device according to embodiments of the present invention may determine in real time whether surplus electricity stored in the ESS 100 or the ESS battery 110 is HVDC which meets a predetermined criterion. Through this determination process, surplus electricity may be stored in the ESS battery 110 until the predetermined criterion is met.

Here, the predetermined criterion may be 1.5 kV or higher according to international standards or 7 kV or higher according to South Korean standards (notice from the Ministry of Trade, Industry and Energy).

In addition, the control device according to embodiments of the present invention may assess profit margins from electricity sales in a case where the electricity generated from the baseload power plant 10 is transmitted via the transmission lines 20 using AC and another case where the surplus electricity is transmitted via the transmission lines 20 using HVDC, and may determine electricity to be transmitted via the distribution system on the basis of assessment results.

For example, the transmission lines 20 may transmit AC generated from the power plant 10 during a first time and transmit HVDC during a second time that does not overlap the first time, and the first and second times may be determined on the basis of the profit margin assessment of electricity sales.

In this way, electricity to be transmitted to the distribution system is determined in consideration of the profit margin of electricity sales, and this can maximize profit from electricity sales.

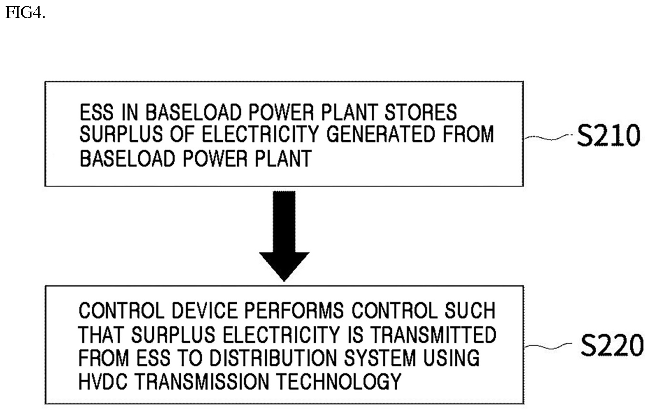

Meanwhile, a method of managing and controlling a hybrid power generation system according to embodiments of the present invention will be described with reference to FIG. 4. FIG. 4 is a flowchart illustrating a method of managing a hybrid power generation and transmission system according to embodiments of the present invention.

In operation S210, an ESS installed in a baseload power plant stores surplus of electricity generated from the baseload power plant.

In operation S220, a control device connected to the ESS performs control to transmit the surplus electricity from the ESS to a distribution system using an HVDC transmission technology.

Here, the surplus electricity may be transmitted from the ESS to the distribution system via transmission lines that are used for AC transmission.

In other words, via the same existing transmission lines, AC electricity generated from the baseload power plant may be transmitted or surplus electricity stored in the ESS may be transmitted using the HVDC transmission technology in accordance with control of the control device.

Also, in operation S220, the control device may assess profit margins from electricity sales in a case where the electricity generated from the baseload power plant is transmitted via the transmission lines using AC and another case where the surplus electricity is transmitted via the transmission lines using HVDC, and may determine electricity to be transmitted via the distribution system on the basis of assessment results. To assess the profit margins, an already known calculation method, etc., may be utilized.

The above-described hybrid power generation and transmission system and method of managing the same according to embodiments of the present invention enable electricity transmission to several areas without installing new transmission lines or HVDC cables, thus solving problems caused by a shortage of transmission lines within a short time. Not only in South Korea but also in other countries, transmission lines of existing transmission systems can be utilized without modification to transmit surplus electricity through an ESS installed in a baseload power plant and an HVDC technology.

In addition, according to embodiments of the present invention, it is possible to minimize power loss caused during AC transmission and transmit bulk power without step-up and step-down processes. Accordingly, the utilization of existing transmission lines can be maximized, and no electromagnetic field is generated, thus preventing complaints about electromagnetic radiation.

The above-described method of managing a hybrid power generation and transmission system according to embodiments of the present invention may be implemented as a computer program including at least one instruction for performing the method and stored and provided in a computer-readable non-transitory recording medium.

The method can be implemented as computer-readable code in a medium on which a program is recorded according to other embodiments of the present invention. The computer-readable medium encompasses any type of recording medium on which computer-readable data is stored. Examples of the computer-readable medium are a hard disk drive (HDD), a solid state disk (SSD), a silicon disk drive (SDD), a read-only memory (ROM), a random access memory (RAM), a compact disc (CD)-ROM, magnetic tape, a floppy disk, an optical data storage device, and the like.

The above description of the present invention is for the purpose of illustration, and those of ordinary skill in the technical field to which the present invention pertains should understand that the present invention can be easily modified into other specific forms without changing the technical spirit of essential characteristics of the present invention. Therefore, the above-described embodiments should be understood as illustrative in all aspects and not limiting.

The scope of the present invention is presented by the following claims rather than the above detailed description, and it is to be understood that all modifications or alterations derived from the meanings and ranges of the claims and equivalents thereof fall within the scope of the present invention.

## Claims

1. A hybrid power generation and transmission system, comprising:
an energy storage system (ESS) installed in a baseload power plant and configured to store surplus of electricity generated from the baseload power plant; and
a control device configured to perform control such that the surplus electricity is transmitted from the ESS to a distribution system using a high voltage direct current (HVDC) transmission technology,
wherein the surplus electricity is transmitted from the ESS to the distribution system via a transmission line used for alternating current (AC) transmission.

2. The hybrid power generation and transmission system of claim 1, wherein the control device assesses profit margins from electricity sales in a case where the electricity generated from the baseload power plant is transmitted via the transmission line using AC and another case where the surplus electricity is transmitted via the transmission line using HVDC, and determines electricity to be transmitted via the distribution system on the basis of assessment results.

3. The hybrid power generation and transmission system of claim 1, wherein the control device determines, in real time, whether the surplus electricity stored in the ESS is HVDC which meets a predetermined criterion.

4. The hybrid power generation and transmission system of claim 3, wherein the predetermined criterion is 1.5 kV or higher according to international standards or 7 kV or higher according to South Korean standards.

5. A method of managing a hybrid power generation and transmission system, comprising:
storing, by an energy storage system (ESS) installed in a baseload power plant, surplus of electricity generated from the baseload power plant; and
performing control, by a control device connected to the ESS, such that the surplus electricity is transmitted from the ESS to a distribution system using an HVDC transmission technology,
wherein the surplus electricity is transmitted from the ESS to the distribution system via a transmission line used for alternating current (AC) transmission.
